Europäisches Patentamt

European Patent Office

Office européen des brevets

(11) Publication number: **0018330**
**A1**

# EUROPEAN PATENT APPLICATION

(21) Application number: **80830021.4**

(22) Date of filing **14.04.80**

(51) Int Cl³ **H 02 B 1/08**, E 05 D 3/02

(30) Priority **24.04.79 IT 2141279**

(43) Date of publication of application: **29.10.80**
**Bulletin 80/22**

(84) Designated Contracting States: **AT BE CH DE FR GB LI LU NL SE**

(71) Applicant: **OFFICINA MECCANICA E.T.A. dei FRATELLI TURATI S.a.S., Via Provinciale per Canzo, Castelmarte Como (IT)**

(72) Inventor: **Turati, Mauro, Costamasnaga (Como) (IT)**

(74) Representative: **Zorzoli, Franco, c/o BUGNION S.p.A. Via Vincenzo Monti55, I-20123 Milan (IT)**

(54) A wing hinging device, designed especially for metal lockers containing electrical and electronic equipment.

(57) A wing hinging device, designed especially for metal lockers containing electrical and electronic equipment, which are endowed with at least one wing having an edge with a 90° bend in respect of its lie, so that the matching line between said wing and the body of the locker is arranged laterally, in line with the side walls of the locker. The aforementioned edge is to be continuous along all sides of said wing. while two hinges are arranged on one side of the latter, each hinge comprising a first bush, integral with a plate which can be secured to a recessed edge defining the opening of the body of the locker.

— 1 —

A wing hinging device, designed especially for metal lockers containing electrical and electronic equipment

This invention refers to a wing hinging device, designed especially
for metal lockers containing electric and electronic equipment.
As far as electric and electronic equipment lockers are concerned,
the current tendency is to provide their wings with outside rabbet
edges, so that the matching line between said wings and the body of
the lockers is arranged laterally, in line with the side walls of the
lockers.

A number of defects, however, are to be noted in currently adopted
hinging systems, one of them being the fact that it is necessary to
arrange for some open areas in the wings, near the hinges, in order
to allow the opening and closing of the wings themselves, thus leading
to possible infiltrations whenever the locker is exposed to the atmospheric agents.

In some other cases, once again in order to allow the wings to open
and close, one proceeded to eliminate the top and bottom bent edges
of said wings, but again the results were rather unsatisfactory from
the aesthetic and operational point of view.

The main purpose of this invention is to eliminate the aforementioned
defects exhibited by currently adopted systems, supplying a wing hinging device capable of ensuring the perfect movement of same, without however requiring the removal of components near the hinges or the elimination of the top and bottom bent edges of the wings, thus producing continuous structures both the frontally and laterally, with considerable functional advantages.

Another important object of this invention is to realize a hinging device which may allow the manufacture of staunch lockers for electrical and electronic equipment all along the contour of their wings, according to a particularly rational arrangement.

A further important object of this invention is to work out a hinging device of the aforementioned type, which may be easy to realize and quick to install.

The above as well as other objects still, which may possibly arise in the course of the following description, are attained by the wing hinging device, designed especially for metal lockers containing electrical and electronic equipment, in accordance with this invention, said lockers being equipped with at least one wing having an edge with a 90° bend in respect of its lie, so that the matching line between the above wing and the body of the locker is arranged laterally, in line with the side walls of the locker, said device being characterized by the fact that the aforementioned edge is to be continuous along all sides of said wing and that two hinges are arranged relative to one side of the latter, each hinge comprising a first bush which is fixed, e.g. welded, inside said edge of the wing and a second bush which is integral – by means of a distance piece – with a plate that can be secured, by means of litte bolts or similar accessories, to a recessed edge defining the opening of the body of the locker, said recessed edge being basically parallel to the sides of the locker.

Such arrangement allows one to open the wing up to 90°, without having to provide flutes or similar accessories opposite the edge of same; thus, when the locker is closed, the aforementioned hinges cannot be seen from any angle whatever, while, when the locker is open, there is no annoying protrusion of the hinges, as occurs with some known types of locker.

Further features and advantages of the invention will appear in the course of the following detailed description of a hinging device, according to the present invention, designed for a metal locker wing containing electrical and electronic equipement, which is supplied by way of example with reference to the enclosed drawing, in which:

- Figure 1 is a horizontal section of a locker designed for electrical and electronic equipment, endowed with the device drawn in accordance with the invention;

- figure 2 is a vertical cross-section, executed along path II-II of figure 1;

- Figure 3 shows detail III of figure 1 on an enlarged scale;

- Figure 4 is a section executed along path IV-IV of figure 3;

- Figure 5 gives a perspective view of a hinge of the device in accordance with the invention.

Referring to said figures, '1' has been adopted in order to indicate the body of a locker for electrical and electronic equipment, parallelepipedon in shape, and '2' in order to indicate its corresponding wing, which is endowed on all of its sides with an edge 3 with a 90° bend in respect of the wing's lie, so that the matching line between wing 2 and body 1 is arranged laterally, in line with the side walls of the locker.

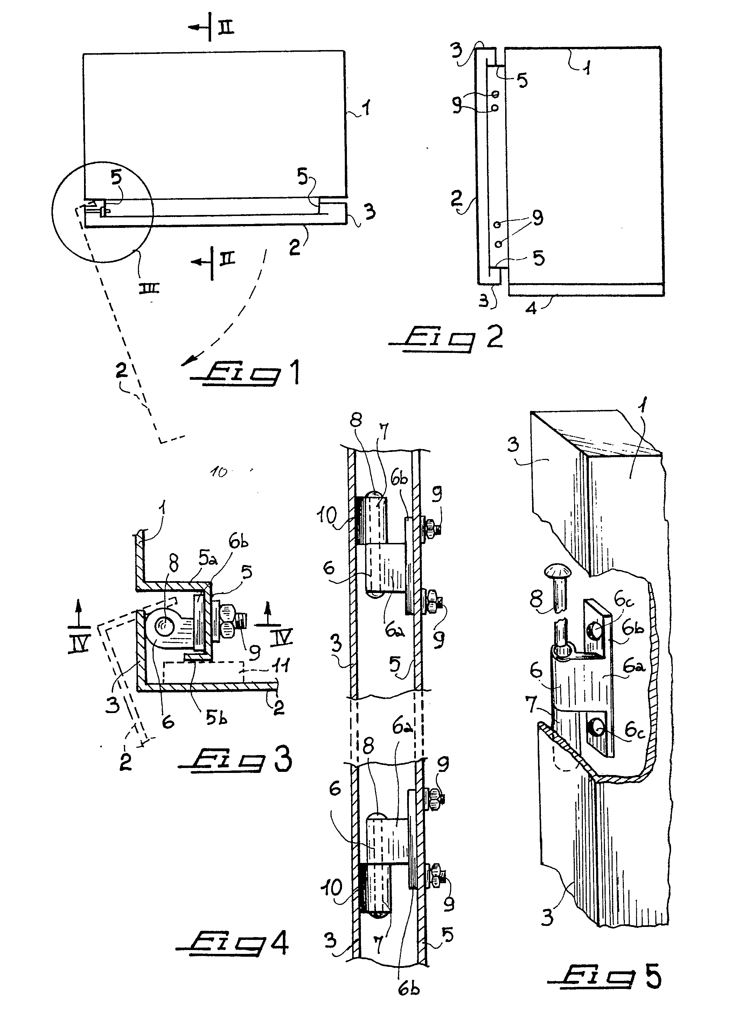

Figure 2 shows also the base of the locker, '4'.

The opening of body 1 is defined by a recessed edge 5, which is parallel to the body sides of the locker, and is present along all the sides of the abovementioned opening. More precisely, such recessed edge is connected to the sides of body 1 by means of a spacer 5a (fig. 3) set at 90° relative to said edge 5, while a fold 5b, with a 90° angle too, is arranged outwardly, and defines a rabbet facing the inside surface of wing 2.

Two hinges are provided on the hinging side, each of which comprises two bushes 6, 7 and a pin 8. By means of a distance piece 6a, bush 6

is integral with a plate 6b, which is equipped with two holes 6c (fig. 5) for the passage of respective locking bolts 9.

Plate 6b is secured, by means of the aforementioned little bolts 9, to the recessed edge 5 of body 1, as shown clearly in figures 3 and 4, so that bush 6 may be facing outwardly.

The corresponding bush 7, on the other hand, is fixed to the inside surface of edge 3 of wing 2, by means of a welding 10 produced near the hinging axis.

After the above explanation, the assembly and employment of the device according to the invention appear to be obvious.

Two bushes 7 are secured to wing 1 by welding them, as mentioned hereabove, onto the inside surface of edge 3, where the hinging is to be effected, according to a mutual alignment. Said edge 3 is therefore unimpaired on all the four sides of wing 2.

Two bushes 6 will be secured correspondingly, in the abovementioned fashion, (by means of the respective plates 6b) to the recessed edge 5 of the opening of body 1, by mutual alignment.

The design requires that, after assembly, bush 7 in the upper hinge be above bush 6, while in the lower hinge bush 7 must be placed below bush 6, as shown clearly in figure 4.

The connection between the abovementioned bushes is to be executed by means of pins 8, in accordance with a known method.

In the closed position, wing 2 is resting on rabbet edge 5b; in order to achieve a good seal, a gasket (dotted as 11 in fig. 3) may be interposed between said edge and wing 2; such gasket may be secured e.g. to the inside surface of wing 2 or to edge 5b. Such gasket is supplied on the whole contour of the opening of body 1.

With such an arrangement, wing 2 can open normally, as shown by the dotted lines in figures 1 and 3, until it reaches 90° in respect of the matching line. The hinges are always outside the adit of the locker, thus eliminating any protrusion which might hinder the use of the locker, the only internal protrusions being the extremely small nuts and bolts 9 and the ends of the latter. As may be noted, the device according to this invention ensures a highly rational structuring of all lockers generally speaking, and of metal lockers designed for elec trical and electronic equipment in particular, thanks to the fact that it provides hingings without protrusions and makes for the continuity of the side walls, a feature  which is of great advantage from the aes_ thetic point of view and in view of the realization of perfectly staunch conditions.

C L A I M S

1) A wing hinging device, designed especially for metal lockers containing electrical and electronic equipment, said lockers being equipped with at least one wing 2 endowed with an edge 3 with a 90° bend in respect of its lie, so that the matching line between the aforementioned wing 2 and the body 1 of the locker is arranged laterally, in line with the side walls of the locker, said device being characterized by the fact that the above edge 3 is to be continuous along all the sides of the above wing 2, and that two hinges are placed relatively to one side of the latter, each hinge comprising a first bush 7, secured, e.g. through welding 10, within the above edge 3 of wing 2, and a second bush 6, which is integral – thanks to a distance piece 6a – with a plate 6b which may be secured by means of little bolts 9 or similar accessories, to a recessed edge 5 defining the opening of the body 1 of the locker, such recessed edge 5 being substantially parallel to the body sides of the locker.

2) A device according to the foregoing claims, characterized by the fact that said plate 6b which is integral with the above second bush 6 is endowed with holes 6c for the passage of little locking bolts 9 or of similar accessories.

0018330

Fig 1

Fig 2

Fig 3

Fig 4

Fig 5

| DOCUMENTS CONSIDERED TO BE RELEVANT | | | CLASSIFICATION OF THE APPLICATION (Int Cl .) |
|---|---|---|---|
| Category | Citation of document with indication, where appropriate, of relevant passages | Relevant to claim | |
| | FR - A - 2 179 316 (E. ARCOS) <br> * Pages 4,5 * <br><br> -- <br><br> FR - A - 1 373 144 (MERLIN & GERIN) <br> * Page 1 * <br><br> ---- | 1,2 <br><br><br> 1 | H 02 B 1/08 <br> E 05 D 3/02 |

**TECHNICAL FIELDS SEARCHED (Int Cl .)**

H 02 B  1/08
             1/12
H 05 K  5/03
             5/02
E 05 G  1/026
             1/04
             1/06
             1/08
E 05 D  3/03
             7/14

**CATEGORY OF CITED DOCUMENTS**

X: particularly relevant
A: technological background
O: non-written disclosure
P: intermediate document
T. theory or principle underlying the invention
E: conflicting application
D: document cited in the application
L. citation for other reasons

&. member of the same patent family, corresponding document

The present search report has been drawn up for all claims

| Place of search | Date of completion of the search | Examiner |
|---|---|---|
| The Hague | 15-07-1980 | DAILLOUX |

EPO Form 1503.1   06.78